# EUROPEAN PATENT APPLICATION

(11) **EP 4 852 187 A1**
(43) Date of publication of application: **09.12.2026**
(21) Application number: 24922249.8
(22) Date of filing: 31.01.2024
(51) Int. Cl.: H01M 50/325, H01M 50/317

(54) **PRESSURE REGULATION VALVE**

(71) Applicant: NOK Corporation, Minato-ku Tokyo 105-8585 (JP)
(72) Inventor: SAKUMA, Katsuyoshi, Kitaibaraki-shi, Ibaraki 319-1535 (JP)
(74) Representative: TBK
(86) International application number: PCT/JP2024/003192
(87) International publication number: WO 2025/163842

(57) **Abstract**

A pressure regulating valve (1) includes: a housing (10) that has a plurality of through holes (11); and a valve body (20) that opens and plugs each of the plurality of through holes (11). The housing (10) is provided with a plurality of projection portions (30) which are annular and respectively surround openings (11a) of the plurality of through holes (11). Each of the projection portions (30) projects from a side of the opening (11a) and has an apex portion (31). The valve body (20) has a contact surface (21) contacting the projection portions (30), and the contact surface (21) of the valve body (20) contacts the projection portions (30) at an annular contact region (S) having a width in a radial direction. The contact region (S) of the contact surface (21) includes an apex portion region (S1) contacting the apex portion (31), an inner region (S2) contacting an inner periphery side relative to the apex portion (31), and an outer region (S3) contacting an outer periphery side relative to the apex portion (31). The projection portion (30) is configured such that a width (w1) of the outer region (S3) in the radial direction is wider than a width (w2) of the inner region (S2) in the radial direction.

## Description

### Technical Field

The present invention relates to a pressure regulating valve and more particularly to a pressure regulating valve that is used for an energy storage module.

### Background Art

A bipolar battery (energy storage module) has been known that includes a bipolar electrode in which a positive electrode is formed on one surface of a current collector and a negative electrode is formed on another surface. In such an energy storage module, bipolar electrodes are laminated, an internal space demarcated by a sealing member is formed between current collectors of bipolar electrodes facing each other, and an electrolytic solution is sealed in the internal space. Further, a separator is interposed between the bipolar electrodes facing each other, and the separator is impregnated with the electrolytic solution and forms an electrolyte layer.

In such an energy storage module, during use, gas such as hydrogen is produced due to overdischarge or the like, for example, and due to this, pressure in the internal space of the energy storage module might rise. There has been an energy storage module in related art that has, in order to avoid such a rise in pressure in an internal space, a pressure regulating valve, in which a valve body opens the internal space when the pressure in the internal space rises and becomes predetermined pressure (for example, see Patent Literature 1).

### Citation List

### Patent Literature

Patent Literature 1: International Publication No. WO 2019/064843

### Summary of Invention

### Technical Problem

An energy storage module in related art which has the above-described pressure regulating valve can prevent a rise in pressure of an internal space; however, in a case where jamming by foreign matter such as dust entering from an outside, formation of scratches in a valve body or a mating portion that the valve body contacts, or the like occurs, an influence might occur on sealing performance of the pressure regulating valve, and an influence might thereby occur on sealing performance of the internal space of the energy storage module.

Accordingly, for the pressure regulating valve in related art, a configuration is desired which can prevent an occurrence of an influence on sealing performance due to jamming by foreign matter in the valve body or scratches in the valve body or a mating portion that the valve body contacts.

The present invention has been made in consideration of the above problems, and an object thereof is to provide a pressure regulating valve that can inhibit an occurrence of an influence on sealing performance due to jamming by foreign matter in a valve body or scratches in the valve body or a mating portion that the valve body contacts.

### Solution to Problem

To achieve the above object, a pressure regulating valve according to the present invention includes: a main body as a member that has a plurality of through holes; and a valve body as a member that opens and plugs each of the plurality of through holes, the main body is provided with a plurality of projection portions which are annular and respectively surround openings of the plurality of through holes, each of the projection portions projects from a side of the opening and has an apex portion as an annular apex, the valve body has a contact surface as a surface contacting the projection portions, the contact surface of the valve body contacts the projection portions at an annular region having a width in a radial direction, the region, of the contact surface, which contacts the projection portions, includes an apex portion region as a region contacting the apex portion, an inner region as a region contacting an inner periphery side relative to the apex portion, and an outer region as a region contacting an outer periphery side relative to the apex portion, and each of the projection portions is configured such that a width of the outer region in the radial direction is wider than a width of the inner region in the radial direction.

In the pressure regulating valve according to one aspect of the present invention, surface pressure to be produced in the region of the contact surface, the region contacting the projection portions, is higher in the inner region than in the outer region.

In the pressure regulating valve according to one aspect of the present invention, in the radial direction, the apex portion of each of the projection portions is closer to an inner periphery end as an end of the projection portion on an inner periphery side than to an outer periphery end as an end of the projection portion on an outer periphery side.

In the pressure regulating valve according to one aspect of the present invention, each of the projection portions has an outer peripheral surface as an annular surface and an inner peripheral surface as an annular surface, the outer peripheral surface is a surface which spreads out between the apex portion and the outer periphery end and is reduced in diameter from a side of the outer periphery end toward a side of the apex portion, and the inner peripheral surface is a surface which spreads out between the apex portion and the inner periphery end and is increased in diameter from a side of the inner periphery end toward the side of the apex portion.

In the pressure regulating valve according to one aspect of the present invention, an inclination angle of the outer peripheral surface toward the apex portion is smaller than an inclination angle of the inner peripheral surface toward the apex portion.

The pressure regulating valve according to one aspect of the present invention further includes a lid body as a member that is fixed to the main body, and the lid body is configured to push the valve body, such that the valve body contacts the projection portions, when the lid body is fixed to the main body.

The pressure regulating valve according to one aspect of the present invention is used for an energy storage module.

In the pressure regulating valve according to one aspect of the present invention, in the energy storage module, a plurality of bipolar electrodes are laminated, each of the bipolar electrodes having an electrode plate, a positive electrode which is provided on one surface of the electrode plate, and a negative electrode which is provided on another surface of the electrode plate, and the plurality of through holes are caused to respectively communicate with a plurality of internal spaces between adjacent ones of the bipolar electrodes, in the plurality of bipolar electrodes which are laminated, in the energy storage module.

### Advantageous Effects of Invention

A pressure regulating valve according to the present invention can inhibit an occurrence of an influence on sealing performance due to jamming by foreign matter in a valve body or scratches in the valve body or a mating portion that the valve body contacts.

### Brief Description of Drawings

[Fig. 1] Fig. 1 is a cross-sectional view illustrating an outline configuration of an energy storage module on which a pressure regulating valve according to an embodiment of the present invention is mounted.
[Fig. 2] Fig. 2 is a perspective view of the energy storage module on which the pressure regulating valve is mounted.
[Fig. 3] Fig. 3 is an exploded perspective view of the pressure regulating valve.
[Fig. 4] Fig. 4 is an exploded perspective view of the pressure regulating valve.
[Fig. 5] Fig. 5 is a front view of a housing in the pressure regulating valve.
[Fig. 6] Fig. 6 is an enlarged view schematically illustrating a valve body facing portion surrounded by a valve body accommodating part in the housing illustrated in Fig. 5.
[Fig. 7] Fig. 7 is a cross-sectional view illustrating a cross section along line A-A in Fig. 6.
[Fig. 8] Fig. 8 is a perspective view schematically illustrating the valve body facing portion surrounded by the valve body accommodating part.
[Fig. 9] Fig. 9 is a diagram illustrating one portion, with respect to an axis line, of a cross section of a projection portion illustrated in Fig. 7 while enlarging the one portion.
[Fig. 10] Fig. 10 is a rear view of a lid body included in the pressure regulating valve.
[Fig. 11] Fig. 11 is a top view of the lid body.
[Fig. 12] Fig. 12 is a cross-sectional view schematically illustrating the valve body in a plugged state where a through hole is plugged.
[Fig. 13] Fig. 13 is an enlarged cross-sectional view illustrating a cross section of the projection portion and a contact surface of the valve body in the plugged state.

### Description of Embodiments

An embodiment of the present invention will hereinafter be described with reference to the drawings.

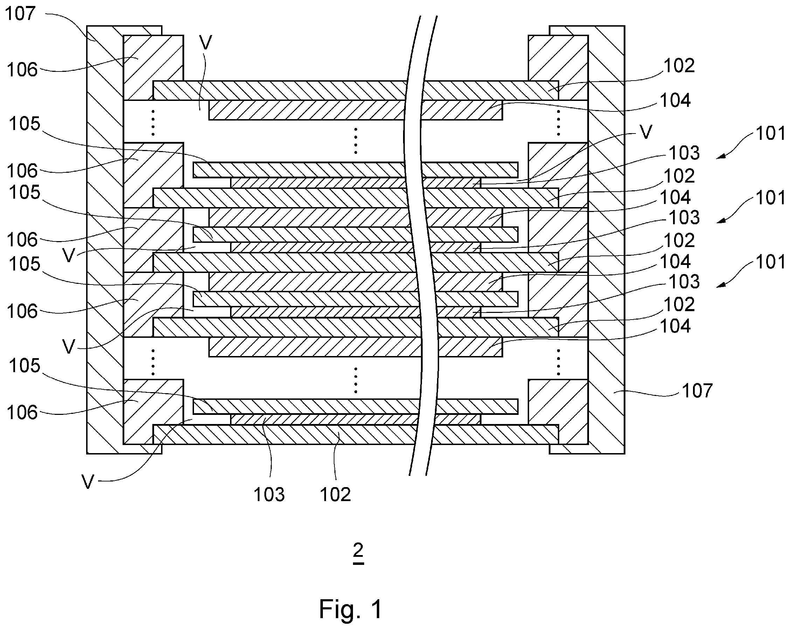

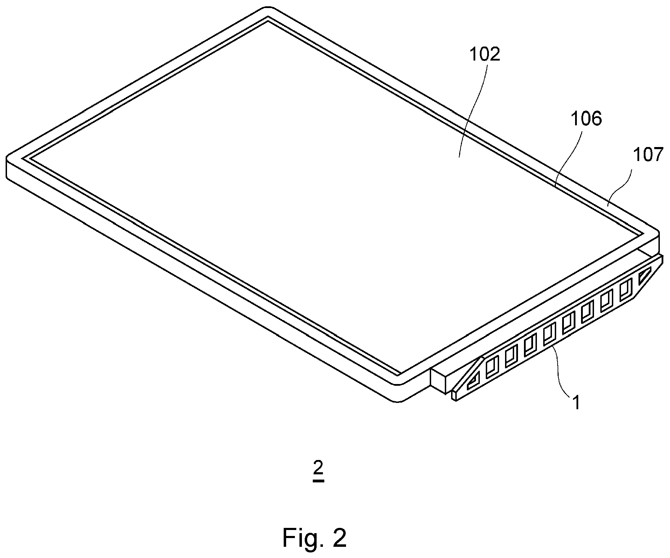

Fig. 1 is a cross-sectional view illustrating an outline configuration of an energy storage module 2 on which a pressure regulating valve 1 according to the embodiment of the present invention is mounted, and Fig. 2 is a perspective view of the energy storage module 2 on which the pressure regulating valve 1 is mounted. The energy storage module 2 is a bipolar battery, for example. Note that an energy storage module for which a pressure regulating valve according to the present invention is used is not limited to a bipolar battery. The energy storage module 2 of the present example will be described as a nickel-metal hydride secondary battery, but the kind of the energy storage module 2 is not limited to the nickel-metal hydride secondary battery and may be another secondary battery such as a lithium-ion secondary battery. Further, the energy storage module 2 is used for an electric automobile, a hybrid automobile, and so forth, for example.

The energy storage module 2 has a plurality of bipolar electrodes 101, and in the energy storage module 2, the plurality of bipolar electrodes 101 are laminated such that adjacent bipolar electrodes 101 face each other and form a laminated body. Each of the bipolar electrodes 101 has a current collector 102 as an electrode plate, a positive electrode 103 which is provided on one surface of the current collector 102, and a negative electrode 104 which is provided on another surface of the current collector 102. A separator 105 is arranged between one pair of bipolar electrodes 101 which neighbor and face each other, and the separator 105 is interposed between each pair of bipolar electrodes 101 which face each other. The positive electrode 103 of one bipolar electrode 101 faces the negative electrode 104 of another bipolar electrode 101 which faces the one bipolar electrode 101 across the separator 105, and the negative electrode 104 of the one bipolar electrode 101 faces the positive electrode 103 of another bipolar electrode 101 which faces the one bipolar electrode 101 across the separator 105. At one end of the laminated body in which the positive electrode 103 of the laminated bipolar electrode 101 faces an outer side, via the separator 105, the current collector 102 provided with the negative electrode 104 on its inner side surface, as a terminal electrode on a negative electrode side is arranged. Further, at another end of the laminated body in which the negative electrode 104 of the laminated bipolar electrode 101 faces an outer side, via the separator 105, the current collector 102 provided with the positive electrode 103 on its inner side surface, as a terminal electrode on a positive electrode side is arranged.

An internal space V demarcated by a sealing member 106 is formed between one pair of bipolar electrodes 101 facing each other, and an electrolytic solution (not illustrated) is sealed in each of the internal spaces V. The internal space V demarcated by the sealing member 106 is formed between the current collector 102 as the terminal electrode on the negative electrode side and the bipolar electrode 101 facing the above current collector 102, and the electrolytic solution (not illustrated) is sealed in the internal space V. Further, the internal space V demarcated by the sealing member 106 is formed between the current collector 102 as the terminal electrode on the positive electrode side and the bipolar electrode 101 facing the above current collector 102, and an electrolytic solution 1 (not illustrated) is sealed in the internal space V. The internal space V is configured to be a space which is airtightly partitioned by the current collector 102 and the sealing member 106. The electrolytic solution is an alkaline solution such as an aqueous potassium hydroxide solution, for example.

As described above, electrodes which are laminated such that the internal spaces V are formed in respective portions between the electrodes facing each other (the bipolar electrodes 101, the current collector 102 as the terminal electrode on the positive electrode side, and the current collector 102 as the terminal electrode on the negative electrode side) are supported by frame bodies 107 which are provided so as to cover side surfaces of the sealing members 106.

The pressure regulating valve 1 is mounted on each of the energy storage module 2 and is a pressure regulating valve which enables each of the internal spaces V of the energy storage module 2 to open. The pressure regulating valve 1 will hereinafter be described. Note that in the drawings, there are cases where reference characters are given to not all of a plurality of configuration elements and reference characters of a part of the plurality of configuration elements are omitted.

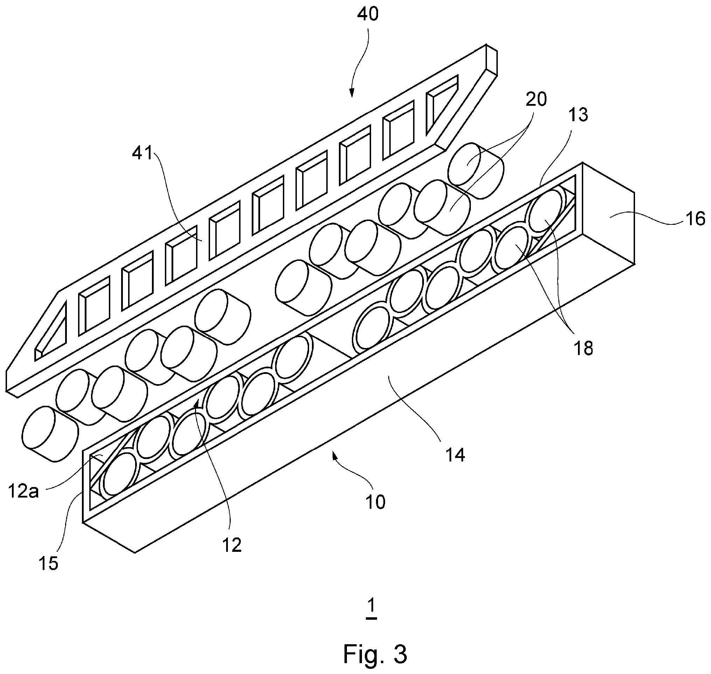

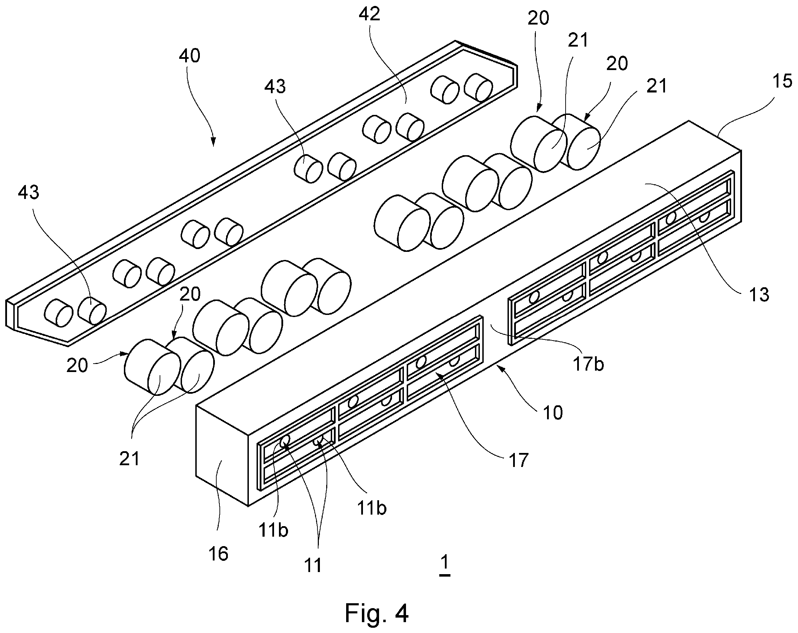

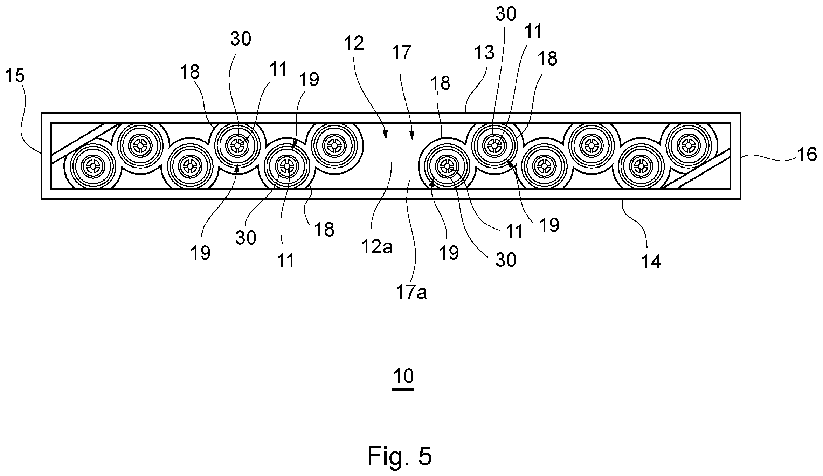

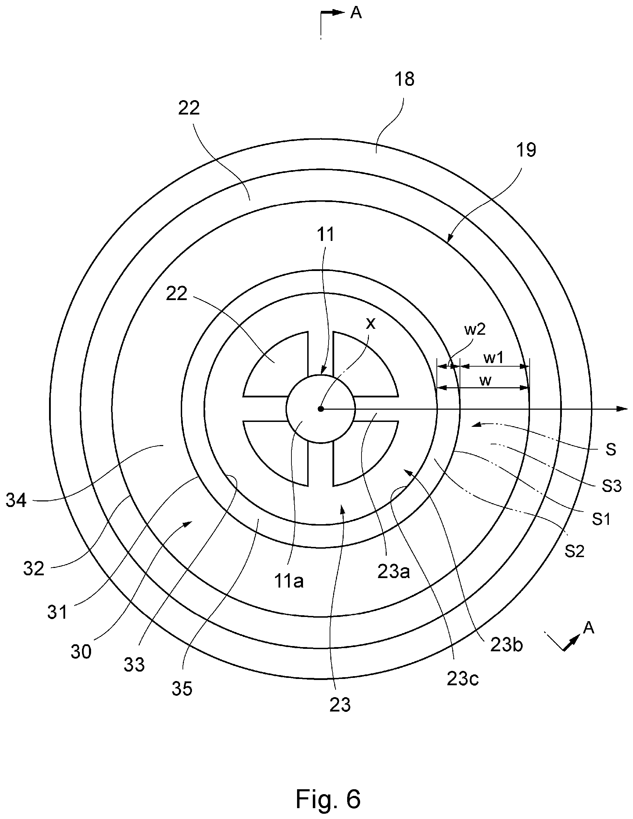

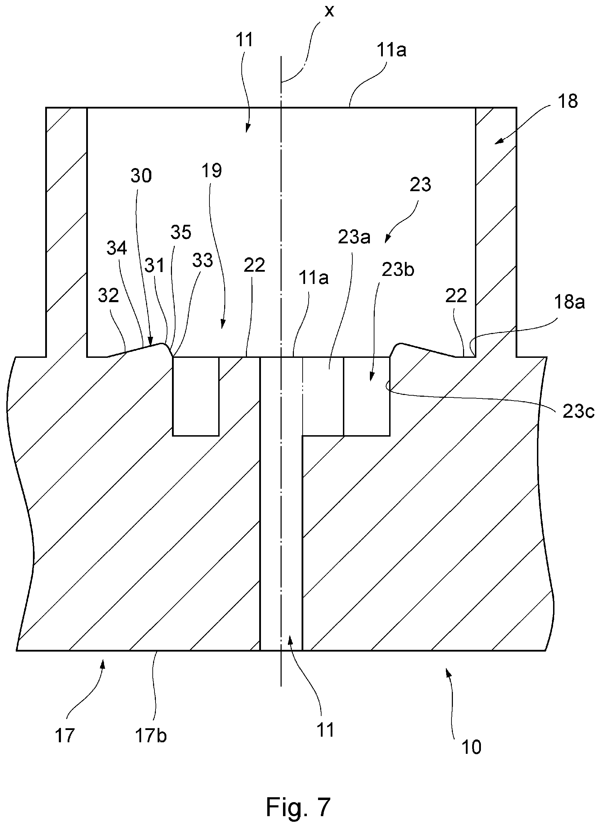

Figs. 3 and 4 are exploded perspective views of the pressure regulating valve 1. Fig. 3 and Fig. 4 are perspective views of the pressure regulating valve 1 as seen from directions different from each other. Further, Fig. 5 is a front view of a part of the pressure regulating valve 1. Further, Fig. 6 is a view illustrating a part of Fig. 5 while enlarging the part, and Fig. 7 is a cross-sectional view illustrating a cross-section along line A-A in Fig. 6. As illustrated in Figs. 3 to 7, the pressure regulating valve 1 includes a housing 10 as a main body, which is a member having a plurality of through holes 11, and valve bodies 20 as members which respectively open and plug the plurality of through holes 11. The housing 10 is provided with a plurality of projection portions 30 which are annular and respectively surround openings 11a of the plurality of through holes 11. The projection portion 30 projects from a side of the opening 11a and has an apex portion 31 as an annular apex. The valve body 20 has a contact surface 21 as a surface contacting the projection portion 30. The contact surface 21 of the valve body 20 contacts the projection portion 30, by a contact region S as an annular region having a width in a radial direction. The contact region S, of the contact surface 21, which contacts the projection portion 30, includes an apex portion region S1 as a region contacting the apex portion 31, an inner region S2 as a region contacting an inner periphery side relative to the apex portion 31, and an outer region S3 as a region contacting an outer periphery side relative to the apex portion 31. The projection portion 30 is configured such that a width w1 of the outer region S3 in the radial direction is wider than a width w2 of the inner region S2 in the radial direction. Note that the housing 10 is illustrated in Fig. 5, and the vicinity of the projection portion 30 is illustrated in Fig. 6. Hereinafter, a configuration of the pressure regulating valve 1 will specifically be described. Note that for convenience of description, a lamination direction of the bipolar electrodes 101 in the energy storage module 2 is set as an up-down direction. Further, a direction orthogonal to an axis line x as a central axis line of the through hole 11 is set as the radial direction, an inner side in the radial direction is set as the inner periphery side, and an outer side in the radial direction is set as the outer periphery side.

Specifically, the pressure regulating valve 1 includes a lid body 40 in addition to the above-described housing 10 and valve bodies 20. The lid body 40 is a member to be fixed to the housing 10 and is configured to push the valve body 20, such that the valve body 20 contacts the projection portion 30, when fixed to the housing 10. As illustrated in Fig. 2, the housing 10 is mounted on the energy storage module 2.

As illustrated in Figs. 3 to 5, the housing 10 has an opening portion 12 as a space which is open to an outside of the housing 10. The number of through holes 11 provided in the housing 10 corresponds to the number of internal spaces V of the energy storage module 2, and each of the plurality of through holes 11 is configured to cause the corresponding internal space V of the energy storage module 2 to communicate with the opening portion 12. The lid body 40 is configured to be fixed to the housing 10 while closing one end (opening 12a), which is open, of the opening portion 12. When the lid body 40 is fixed to the housing 10, the lid body 40 pushes the plurality of valve bodies 20, and the plurality of valve bodies 20 are configured to thereby plug the openings 11a of the plurality of through holes 11.

As illustrated in Figs. 3 and 5, the opening portion 12 of the housing 10 is configured to form a recessed part, and for example, as illustrated in Figs. 3 to 5, the housing 10 has a box-shaped external shape. The housing 10 has an upper wall part 13, a lower wall part 14, and side wall parts 15 and 16 as portions forming the opening portion 12, for example. The upper wall part 13 and the lower wall part 14 face each other in the up-down direction, and the side wall parts 15 and 16 respectively extend between both ends of the upper wall part 13 and the lower wall part 14. The upper wall part 13, the lower wall part 14, and the side wall parts 15 and 16 demarcate the opening portion 12. As illustrated in Fig. 5, a shape of the opening portion 12 in a front view is a rectangular shape or a generally rectangular shape, for example, a direction in which the side wall parts 15 and 16 face each other is a longitudinal direction of the housing 10, and a direction in which the upper wall part 13 and the lower wall part 14 face each other is a short-side direction of the housing 10.

Further, as illustrated in Figs. 3 to 5, the housing 10 has a bottom wall part 17 as a portion which closes an opposite end to the opening 12a of the opening portion 12. The bottom wall part 17 is connected to ends, of the upper wall part 13, the lower wall part 14, and the side wall parts 15 and 16, on an opposite side to the opening 12a of the opening portion 12. Thus, the bottom wall part 17 has a bottom surface 17a as a surface facing an open portion 12. Further, as illustrated in Fig. 4, the bottom wall part 17 has a back surface 17b facing away from the bottom surface 17a. The plurality of through holes 11 and the plurality of projection portions 30 are formed in the bottom wall part 17.

As illustrated in Figs. 4 to 7, the opening 11a of the through hole 11 is positioned in the bottom surface 17a of the bottom wall part 17, an opening 11b as another opening of the through hole 11 is positioned in the back surface 17b of the bottom wall part 17, and the through hole 11 passes through a portion between the bottom surface 17a and the back surface 17b of the bottom wall part 17. The pressure regulating valve 1 is mounted on the energy storage module 2 at the back surface 17b of the bottom wall part 17. The back surface 17b of the bottom wall part 17 is configured such that the respective through holes 11 are capable of airtightly communicating with a plurality of openings which open the internal spaces V of the energy storage module 2 to the outside. The back surface 17b of the bottom wall part 17 of the pressure regulating valve 1 is bonded to the energy storage module 2, for example. The back surface 17b of the bottom wall part 17 is bonded, by welding, to the frame body 107 of the energy storage module 2 or a member to be mounted on the frame body 107, for example.

As illustrated in Figs. 3 and 5, in the housing 10, a plurality of valve body accommodating parts 18 as portions forming spaces for accommodating the valve bodies 20 are formed. As illustrated in Figs. 3 and 5, for example, the valve body accommodating part 18 is a tubular portion which projects from the bottom surface 17a of the bottom wall part 17 to the opening 12a side of the opening portion 12. Specifically, a shape of the valve body accommodating part 18 is a cylindrical shape or a generally cylindrical shape, for example. The plurality of valve body accommodating parts 18 are respectively provided corresponding to the plurality of through holes 11. Each of the through holes 11 communicates, at the opening 11a, with a space to be formed with the valve body accommodating part 18. In other words, the opening 11a of each of the through holes 11 is positioned in a valve body facing portion 19 as a portion, of the bottom surface 17a, which is positioned on the inner periphery side of the corresponding valve body accommodating part 18. As described later, the valve body facing portion 19 surrounded by the valve body accommodating part 18 is a portion in which the valve body 20 accommodated in the valve body accommodating part 18 is pushed and pressed by the lid body 40. As illustrated in Figs. 3 and 5, the plurality of valve body accommodating parts 18 are arranged in the opening portion 12 in a manner designed to save space.

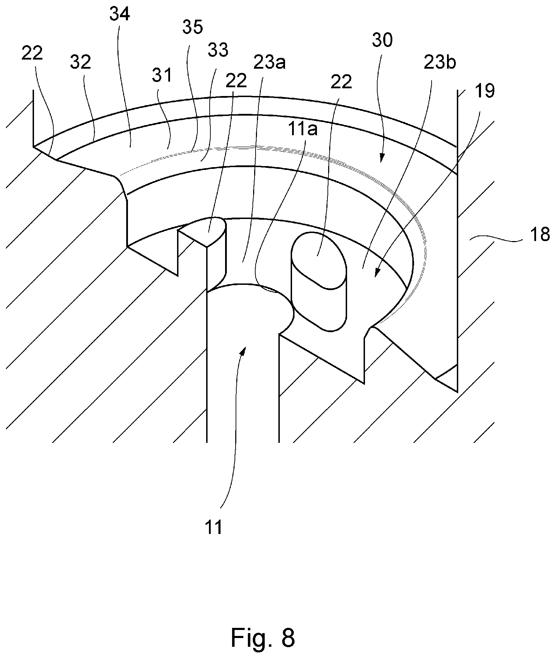

Figs. 6 and 8 are views schematically illustrating the valve body facing portion 19 surrounded by the valve body accommodating part 18, and Fig. 7 is a cross-sectional view schematically illustrating a part of a cross section along line A-A in Fig. 6. Fig. 6 is a front view of the valve body facing surface 19, and Fig. 8 is a cross-sectional perspective view of the valve body facing surface 19. Further, Fig. 7 illustrates a cross section of the valve body facing surface 19. As illustrated in Figs. 6 and 7, the valve body facing portion 19 has a valve body facing surface 22 as a part of the bottom surface 17a of the bottom wall part 17. The valve body facing surface 22 spreads out on a flat surface or a generally flat surface, for example. The through hole 11 is demarcated by a cylindrical surface or a generally cylindrical surface which has the axis line x orthogonal or generally orthogonal to the valve body facing surface 22 as a central axis or a generally central axis, and the opening 11a of the through hole 11 is formed in the valve body facing surface 22.

As illustrated in Figs. 6 to 8, in the valve body facing surface 22, a groove 23 is formed so as to surround the opening 11a. The groove 23 is a groove which is recessed from the valve body facing surface 22 to the back surface 17b side of the bottom wall part 17 and is connected to a part of the through hole 11 on the inner periphery side. In an illustrated example, the groove 23 has a groove portion 23a as a groove extending in the radial direction and a groove portion 23b as an annular groove which is connected to an end of the groove portion 23a on the outer periphery side. Note that a shape of the groove 23 to be formed in a valve body facing portion 22 is not limited to an illustrated shape and may be another shape. Further, the groove 23 may not be formed in the valve body facing portion 19. By the groove 23, an opening area of the through hole 11 in the valve body facing surface 22 can be made larger than an opening area of the opening 11a of the through hole 11. Further, by the groove 23, an opening area of the through hole 11 in the valve body facing surface 22 can be adjusted. Accordingly, operating pressure of the valve body 20, which will be described later, can be set to desired pressure.

Further, as illustrated in Figs. 6 to 8, the projection portion 30 is a projection that is formed on the valve body facing surface 22 and is annular around the axis line x of the through hole 11, and projects from the valve body facing surface 22 toward the opening 12a side of the opening portion 12. Further, the projection portion 30 is formed to surround the opening 11a of the through hole 11 and the groove 23. As illustrated in Fig. 6, for example, the projection portion 30 extends along a circle or a generally circle which has the axis line x of the through hole 11 as a center or a generally center. Note that a shape of the projection portion 30 in a front view is not limited to a circular shape but may be another shape. As described later, the projection portion 30 is a bead which contacts the contact surface 21 of the valve body 20 and seals a portion between the valve body 20 and the valve body facing portion 19.

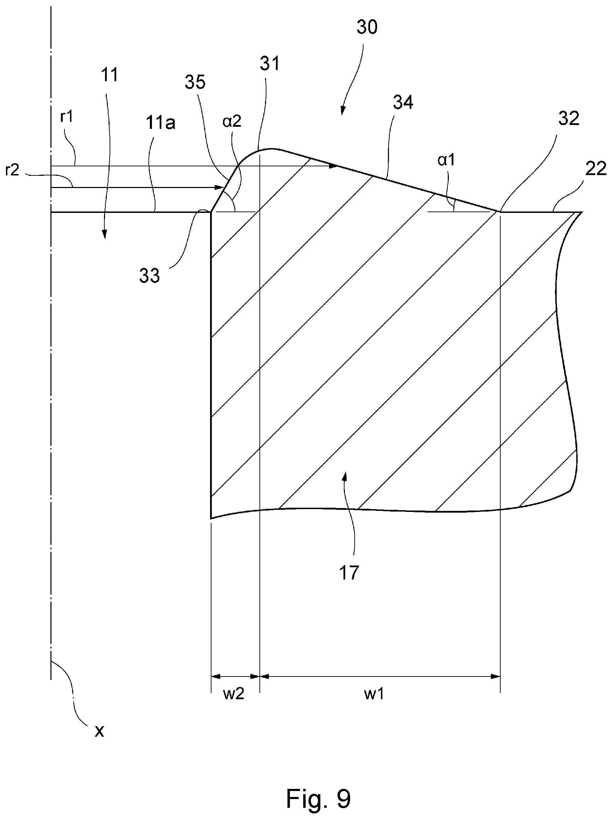

Fig. 9 is a diagram illustrating one portion, with respect to the axis line x, of a cross section of the projection portion 30 illustrated in Fig. 7 while enlarging the one portion. As illustrated in Figs. 6 to 9, the projection portion 30 has the apex portion 31 and has an outer periphery end 32 as an end on the outer periphery side and an inner periphery end 33 as an end on the inner periphery side. The apex portion 31 is an apex throughout a whole circumference of the projection portion 30 and is an annular portion of the projection portion 30 on the opening 12a side, the annular portion being most distant from the valve body facing surface 22 to the opening 12a side. For example, a height of the apex portion 31 is constant or generally constant throughout the whole circumference. Note that the height of the apex portion 31 is a distance in the axis line x direction between the valve body facing surface 22 and the apex portion 31. The outer periphery end 32 is an end of the projection portion 30 on the valve body facing surface 22 side and extends in an annular shape. Similarly, the inner periphery end 33 is an end of the projection portion 30 on the valve body facing surface 22 side and extends in an annular shape. The projection portion 30 is connected to the valve body facing surface 22 at the outer periphery end 32 and is connected to an outer edge 23c of the annular groove portion 23b of the groove 23 at the inner periphery end 33 (see Figs. 6 and 7). Note that the outer edge 23c of the groove portion 23b is an edge of the groove portion 23b on the outer periphery side and an upper side. Each of the outer periphery end 32 and the inner periphery end 33 extends along a circle or a generally circle which has the axis line x as a center or a generally center, for example.

Note that the projection portion 30 may be connected to the valve body facing surface 22 at the inner periphery end 33. In this case, the inner periphery end 33 of the projection portion 30 is positioned at a position distant from the groove portion 23b to the outer periphery side. Further, the outer periphery end 32 of the projection portion 30 may be connected to the valve body accommodating part 18. In other words, the outer periphery end 32 of the projection portion 30 may be connected to an inner edge 18a (see Fig. 7) as an edge of the valve body accommodating part 18 on the inner periphery side and a lower side.

Further, as illustrated in Figs. 6 to 9, the projection portion 30 has an outer peripheral surface 34 as an annular surface and an inner peripheral surface 35 as an annular surface. The outer peripheral surface 34 is a surface which spreads out between the apex portion 31 and the outer periphery end 32. As illustrated in Fig. 9, for example, the outer peripheral surface 34 is reduced in diameter from the outer periphery end 32 toward the apex portion 31 side. The inner peripheral surface 35 is a surface which spreads out between the apex portion 31 and the inner periphery end 33. As illustrated in Fig. 9, for example, the inner peripheral surface 35 is increased in diameter from the inner periphery end 33 side toward the apex portion 31 side. Note that in Fig. 9, r1 indicates a radius of the outer peripheral surface 34 as a distance from the axis line x, and r2 indicates a radius of the inner peripheral surface 35.

As described above, the projection portion 30 is configured such that a width, in the radial direction, of the outer region S3, which contacts the outer periphery side relative to an apex portion 30, in the contact region S of the contact surface 21 of the valve body 20, which contacts the projection portion 30, is wider than a width, in the radial direction, of the inner region S2, which contacts the inner periphery side relative to the apex portion 30, in the contact region S of the contact surface 21. Specifically, for example, as illustrated in Fig. 6, the apex portion 31 of the projection portion 30 is closer, in the radial direction, to the inner periphery end 33 of the projection portion 30 than the outer periphery end 32 of the projection portion 30. In other words, as illustrated in Figs. 6 and 9, the width w1 in the radial direction between the apex portion 31 and the outer periphery end 32 is wider than the width w2 in the radial direction between the apex portion 31 and the inner periphery end 33.

As described above, in the projection portion 30, the width w1 in the radial direction between the apex portion 31 and the outer periphery end 32 is wider than the width w2 in the radial direction between the apex portion 31 and the inner periphery end 33. Thus, when the contact surface 21 of the valve body 20 contacts the projection portion 30, in the contact region S, the width of the outer region S3 in the radial direction becomes wider than the width of the inner region S2 in the radial direction.

Further, the projection portion 30 is formed such that surface pressure to be produced in the contact region S of the contact surface 21 becomes higher in the inner region S2 than in the outer region S3. Specifically, for example, in the projection portion 30, the width in the radial direction between the apex portion 31 and the outer periphery end 32 is wider than the width in the radial direction between the apex portion 31 and the inner periphery end 33, the outer peripheral surface 34 is reduced in diameter from the outer periphery end 32 toward an apex portion side, and an inner peripheral surface 34 is increased in diameter from the inner periphery end 33 side toward the apex portion 31 side.

As described above, in the projection portion 30, the width w1 in the radial direction between the apex portion 31 and the outer periphery end 32 is wider than the width w2 in the radial direction between the apex portion 31 and the inner periphery end 33, the outer peripheral surface 34 is reduced in diameter from the outer periphery end 32 toward the apex portion 31, and the inner peripheral surface 34 is increased in diameter from the inner periphery end 33 toward the apex portion 31. Specifically, for example, as illustrated in Fig. 9, an inclination angle α1 of the outer peripheral surface 34 toward the apex portion 31 is smaller than an inclination angle α2 of the inner peripheral surface 35 toward the apex portion 31. Note that the inclination angle α1 is an angle between a plane, orthogonal to the axis line x, along which the valve body facing surface 22 extends and a tangent line at each position of the outer peripheral surface 34, and the inclination angle α2 is an angle between the plane orthogonal to the axis line x and a tangent line at each position of the inner peripheral surface 35. Thus, the surface pressure to be produced in the contact region S of the contact surface 21 becomes higher in the inner region S2 than in the outer region S3.

Specifically, for example, as illustrated in Fig. 9, the outer peripheral surface 34 of the projection portion 30 has a tapered surface and has a conical surface or a generally conical surface which has the axis line x as a central axis or a generally central axis. The outer peripheral surface 34 may have a tapered surface in a part, or the whole outer peripheral surface 34 may be provided as a tapered surface. However, the vicinity of the apex portion 31 has a smooth curved surface. For example, in a case where the outer peripheral surface 34 is smoothly connected to the valve body facing surface 22, the vicinity of the outer periphery end 32 in the outer peripheral surface 34 has a curved surface which is recessed toward the inner periphery side, and a part of the outer peripheral surface 34 becomes a tapered surface. Similarly, for example, in a case where the inner peripheral surface 35 is smoothly connected to the valve body facing surface 22, the vicinity of the inner periphery end 33 in the inner peripheral surface 35 has a curved surface which is recessed toward the inner periphery side, and a part of the inner peripheral surface 35 becomes a tapered surface.

Shapes of the outer peripheral surface 34 and the inner peripheral surface 35 of the projection portion 30 are not limited to shapes having a tapered surface as described above. As long as the projection portion 30 has a shape which has the above-described effect, the shapes of the outer peripheral surface 34 and the inner peripheral surface 35 may be other shapes. For example, the outer peripheral surface 34 may have a shape, which forms a curve protruding to an upper side, in a cross section by a plane including the axis line x. Similarly, for example, the inner peripheral surface 35 may have a shape, which forms a curve protruding to the upper side, in a cross section by the plane including the axis line x.

The housing 10 has the above-described configuration and is integrally formed of the same material. In other words, the upper wall part 13, the lower wall part 14, the side wall parts 15 and 16, the bottom wall part 17, and the valve body accommodating part 18 are portions of the housing 10 which is integrally formed of the same material and are integrally connected.

The valve body 20 is an elastic body which is formed of an elastic material such as rubber, for example. The valve body 20 has a shape which is capable of being accommodated in the valve body accommodating part 18 and has a shape which is capable of plugging the through hole 11 while the contact surface 21 contacts the projection portion 30, which is formed in the valve body facing surface 22, in the valve body accommodating part 18. As illustrated in Figs. 3 and 4, for example, the valve body 20 has a columnar shape. Specifically, for example, the valve body 20 has a circular columnar or a generally circular columnar shape and has one end surface as the contact surface 21. Note that the shape of the valve body 20 is not limited to a circular columnar shape or a generally circular columnar shape, may be another shape, and is a shape corresponding to a shape or the like of the valve body accommodating part 18.

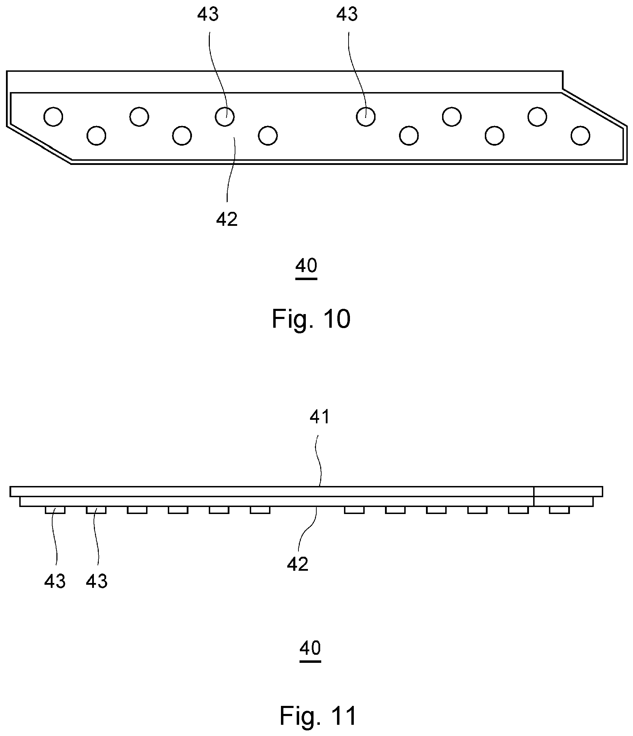

Fig. 10 is a rear view of the lid body 40, and Fig. 11 is a top view of the lid body 40. As described above, the lid body 40 is configured to be mounted on the opening portion 12 of the housing 10 and is a member that plugs the opening 12a of the opening portion 12 of the housing 10, acts on the valve body 20, and thereby tightly closes the internal space V of the energy storage module 2. Specifically, the lid body 40 is configured to be mounted on the housing 10 so as to cover the opening 12a of the housing 10, to push the valve body 20 in the valve body accommodating part 18 to the valve body facing surface 22 side, to push the contact surface 21 of the valve body 20 onto the projection portion 30, to close the opening 11a of the through hole 11 and the groove 23, and to plug the through hole 11. As illustrated in Figs. 10 and 11, for example, the lid body 40 is a plate-shaped member extending along a plane and has a front surface 41 as a surface facing a front side and a back surface 42 as a surface facing a rear side.

As illustrated in Figs. 4, 10, and 11, projections 43 projecting to the bottom wall part 17 side are provided on the back surface 42 of the lid body 40, and the number of projections 43 corresponds to the number of the valve body accommodating parts 18. Each of the projections 43 is arranged so as to enter an internal portion of the corresponding valve body accommodating part 18 when the lid body 40 is mounted on the housing 10.

In the pressure regulating valve 1, each of the projections 43 of the lid body 40 pushes the valve body 20 to the bottom wall part 17 side in the internal portion of the corresponding valve body accommodating part 18 and pushes the contact surface 21 of the valve body 20 onto the projection portion 30. Accordingly, the corresponding through hole 11 and groove 23 are closed by each valve body 20, the corresponding through hole 11 is plugged, and the corresponding internal space V of the energy storage module 2 is tightly closed. On the other hand, pressure of the internal space V of the energy storage module 2 acts on the valve body 20 via the through hole 11 and gives force to push the valve body 20 to the lid body 40 side. When the pressure of the internal space V of the energy storage module 2 rises and the pressure of the internal space V exceeds predetermined pressure (operating pressure), the force to push the valve body 20 to the lid body 40 side becomes greater than force to push the contact surface 21 of the valve body 20 onto the projection portion 30, the contact surface 21 of the valve body 20 moves away from the projection portion 30, the through hole 11 is opened, and the through hole 11 communicates with an opening portion 11. Accordingly, the internal space V, of the energy storage module 2, in which the pressure exceeds a predetermined value is opened via the corresponding through hole 11, and the pressure of the internal space V is thereby released. On the other hand, when the pressure of the internal space V becomes smaller than the predetermined value by release of the pressure, the contact surface 21 of the valve body 20 is again pushed onto the projection portion 30, the through hole 11 is plugged, and the internal space V of the energy storage module 2 is again tightly closed. In such a manner, the internal space V of the energy storage module 2 is prevented from having excessively high pressure.

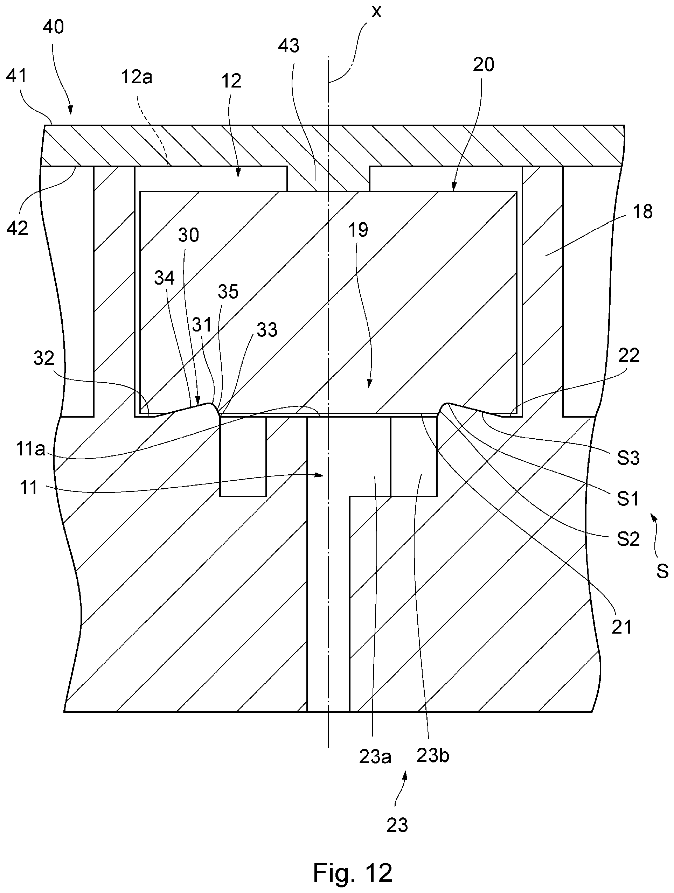

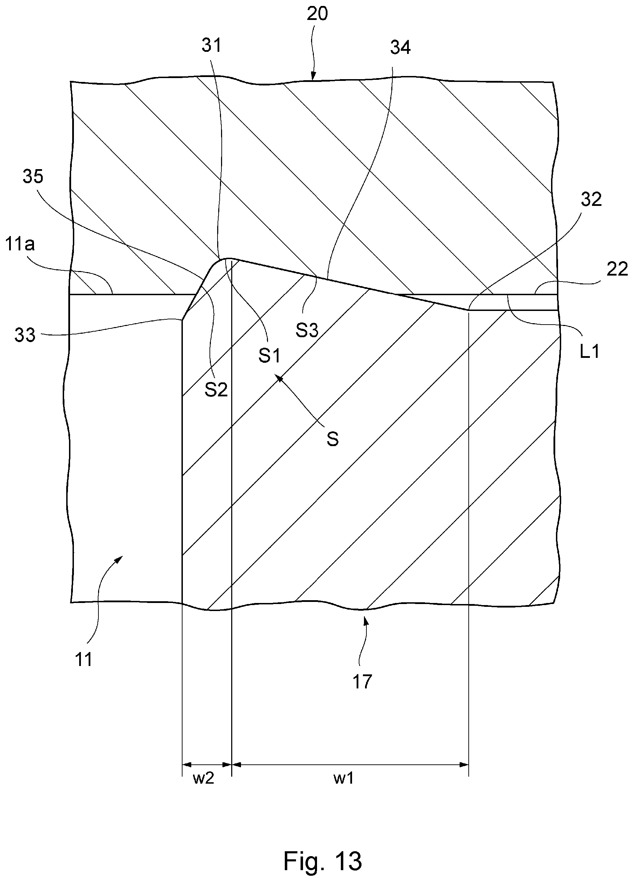

Next, a description will be made about an action of the projection portion 30 formed in the valve body facing portion 19. Fig. 12 is a cross-sectional view schematically illustrating the valve body 20 in a state where the valve body 20 plugs the through hole 11 (hereinafter, referred to as a plugged state), and Fig. 13 is an enlarged cross-sectional view illustrating a cross section including the projection portion 30 and the contact surface 21 of the valve body 20 in the plugged state. As illustrated in Figs. 12 and 13, in the plugged state, the apex portion 31 of the projection portion 30, the outer peripheral surface 34, and the inner peripheral surface 35 contact the contact surface 21 of the valve body 20. As described above, the projection portion 30 contacts the contact region S of the contact surface 21. A portion of the outer peripheral surface 34 of the projection portion 30, the portion contacting the contact surface 21, is a portion of the projection portion 30 on the apex portion 31 side from a position distant from the outer periphery end 32, and the outer peripheral surface 34 contacts the outer region S3 of the contact region S of the contact surface 21. Further, a portion of the inner peripheral surface 35 of the projection portion 30, the portion contacting the contact surface 21, is a portion of the projection portion 30 on the apex portion 31 side from a position distant from the inner periphery end 33, and the inner peripheral surface 35 contacts the inner region S2 of the contact region S of the contact surface 21.

As described above, in the projection portion 30, the width in the radial direction between the apex portion 31 and the outer periphery end 32 is wider than the width in the radial direction between the apex portion 31 and the inner periphery end 33. In other words, in the radial direction, a width of the outer peripheral surface 34 is wider than a width of the inner peripheral surface 35. Thus, in a contact surface S, a width of the outer region S3 in the radial direction is wider than a width of the inner region S2 in the radial direction. Thus, even in a case where jamming by foreign matter such as dust entering from the outside occurs between the projection portion 30 and the contact surface 21 or even in a case where scratches are formed in the contact region S of the contact surface 21 or the projection portion 30, because the outer region S3 that the outer peripheral surface 34 of the projection portion 30 contacts is wide, a gap to be formed by foreign matter or scratches is less likely to pass through the contact region S, and the gap to be formed by foreign matter or scratches is inhibited from passing through the contact region S. As described above, an occurrence of an influence on sealing performance between the contact surface 21 of the valve body 20 and the projection portion 30 due to jamming by foreign matter or scratches in the contact surface 21 or the projection portion 30 is inhibited.

Further, in a case where the outer peripheral surface 34 and the inner peripheral surface 35 of the projection portion 30 include a tapered surface or in a case where each of the outer peripheral surface 34 and the inner peripheral surface 35 of a projection portion 31 is a curved surface which forms a curve protruding to the upper side in a cross section, the contact surface 21 is pushed onto the outer peripheral surface 34 and the inner peripheral surface 35 of the projection portion 31, and contact between the outer peripheral surface 34 and inner peripheral surface 35 of the projection portion 31 and the contact surface 21 can be made tighter throughout the whole contact region S. Thus, sealing performance between the projection portion 31 and the contact surface 21 can be improved.

Further, the inclination angle α1 of the outer peripheral surface 34 of the projection portion 30 is smaller than the inclination angle α2 of the inner peripheral surface 35 of the projection portion 30, and the outer peripheral surface 34 is more gently inclined than the inner peripheral surface 35 with respect to the valve body facing surface 22. Thus, the surface pressure to be produced in the contact region S of the contact surface 21 becomes higher in the inner region S2 than in the outer region S3. Consequently, as for contact between the valve body 20 and the projection portion 30, contact in the inner region S2 mainly functions for plugging of the through hole 11. Thus, by setting surface pressure to be produced in the inner region S2 to a desired value, the operating pressure as pressure for opening the through hole 11, which results from reception, by the valve body 20, of pressure of the internal space V of the energy storage module 2, is set to a desired value. Because the inner region S2 and the inner peripheral surface 35, which mainly work for the plugging of the through hole 11, are adjacent to the through hole 11, in an initial phase in which the contact surface 21 of the valve body 20 moves away from the projection portion 30, the inner region S2 and the inner peripheral surface 35 directly receive pressure of the internal space V of the energy storage module 2. Thus, the operating pressure of the valve body 20 can be set based on the pressure of the internal space V of the energy storage module 2, and the operating pressure of the valve body 20 can more accurately be set.

As described above, the pressure regulating valve 1 according to the embodiment of the present invention can inhibit an occurrence of an influence on sealing performance of the internal space V of the energy storage module 2 due to jamming by foreign matter in the valve body 20 or scratches in the valve body 20 or the projection portion 30.

In the foregoing, the present invention is described through the above embodiment, but the technical scope of the present invention is not limited to the scope described in the above embodiment. It is clear for persons skilled in the art that various changes or improvements can be added to the above embodiment. It is clear from descriptions in the claims that forms to which such changes or improvements are added can be included in the technical scope of the present invention.

The embodiment described in the foregoing is for easy understanding of the present invention but is not for limited interpretation of the present invention. Further, the above-described embodiment does not limit use targets in which the present invention is used, and the present invention can include anything as use targets thereof. Configuration elements included in the above embodiment and arrangement, materials, conditions, shapes, sizes, and so forth of the configuration elements are not limited to the raised examples and may appropriately be changed. For example, the present invention includes differences that occur in practice such as manufacturing tolerance. Further, to the extent that no technical inconsistency occurs, configuration elements described in different embodiments can mutually and partially be substituted or combined. Further, configurations can appropriately selectively be combined so that at least a part of the above-described objects and effects is exhibited.

### Reference Signs List

- 1: pressure regulating valve
- 2: energy storage module
- 10: housing (main body)
- 11: through hole
- 11a, 11b: opening
- 12: opening portion
- 12a: opening
- 13: upper wall part
- 14: lower wall part
- 15, 16: side wall part
- 17: bottom wall part
- 17a: bottom surface
- 17b: back surface
- 18: valve body accommodating part
- 18a: inner edge
- 19: valve body facing portion
- 20: valve body
- 21: contact surface
- 22: valve body facing surface
- 23: groove
- 23a, 23b: groove portion
- 23c: outer edge
- 30: projection portion
- 31: apex portion
- 32: outer periphery end
- 33: inner periphery end
- 34: outer peripheral surface
- 35: inner peripheral surface
- 40: lid body
- 41: front surface
- 42: back surface
- 43: projection
- 101: bipolar electrode
- 102: current collector
- 103: positive electrode
- 104: negative electrode
- 105: separator
- 106: sealing member
- 107: frame body
- r1, r2: radius
- S: contact region
- S1: apex portion region
- S2: inner region
- S3: outer region
- V: internal space
- x: axis line
- w1, w2: width
- α1, α2: inclination angle

## Claims

1. A pressure regulating valve comprising:
a main body as a member that has a plurality of through holes; and
a valve body as a member that opens and plugs each of the plurality of through holes, wherein
the main body is provided with a plurality of projection portions which are annular and respectively surround openings of the plurality of through holes,
each of the projection portions projects from a side of the opening and has an apex portion as an annular apex,
the valve body has a contact surface as a surface contacting the projection portions,
the contact surface of the valve body contacts the projection portions at an annular region having a width in a radial direction,
the region, of the contact surface, which contacts the projection portions, includes an apex portion region as a region contacting the apex portion, an inner region as a region contacting an inner periphery side relative to the apex portion, and an outer region as a region contacting an outer periphery side relative to the apex portion, and
each of the projection portions is configured such that a width of the outer region in the radial direction is wider than a width of the inner region in the radial direction.

2. The pressure regulating valve according to claim 2, wherein
surface pressure to be produced in the region of the contact surface, the region contacting the projection portions, is higher in the inner region than in the outer region.

3. The pressure regulating valve according to claim 1, wherein
in the radial direction, the apex portion of each of the projection portions is closer to an inner periphery end as an end of the projection portion on an inner periphery side than to an outer periphery end as an end of the projection portion on an outer periphery side.

4. The pressure regulating valve according to claim 3, wherein
each of the projection portions has an outer peripheral surface as an annular surface and an inner peripheral surface as an annular surface,
the outer peripheral surface is a surface which spreads out between the apex portion and the outer periphery end and is reduced in diameter from a side of the outer periphery end toward a side of the apex portion, and
the inner peripheral surface is a surface which spreads out between the apex portion and the inner periphery end and is increased in diameter from a side of the inner periphery end toward the side of the apex portion.

5. The pressure regulating valve according to claim 4, wherein
an inclination angle of the outer peripheral surface toward the apex portion is smaller than an inclination angle of the inner peripheral surface toward the apex portion.

6. The pressure regulating valve according to claim 1, further comprising
a lid body as a member that is fixed to the main body, wherein
the lid body is configured to push the valve body, such that the valve body contacts the projection portions, when the lid body is fixed to the main body.

7. The pressure regulating valve according to claim 1,
the pressure regulating valve being used for an energy storage module.

8. The pressure regulating valve according to claim 7, wherein
in the energy storage module, a plurality of bipolar electrodes are laminated, each of the bipolar electrodes having an electrode plate, a positive electrode which is provided on one surface of the electrode plate, and a negative electrode which is provided on another surface of the electrode plate, and
the plurality of through holes are caused to respectively communicate with a plurality of internal spaces between adjacent ones of the bipolar electrodes, in the plurality of bipolar electrodes which are laminated, in the energy storage module.
